# EUROPÄISCHE PATENTSCHRIFT

(11) **EP 0 401 392 B1**
(45) Veröffentlichungstag und Bekanntmachung des Hinweises auf die Patenterteilung: **02.02.1994**
(21) Anmeldenummer: 89110106.5
(22) Anmeldetag: 03.06.1989
(51) Int. Cl.: B65D 85/68

(54) **Versandverpackung für fahrbereite Motorräder und dergleichen**
Shipping package for stand-by motorcycles and the like
Emballage d'expédition pour des motocyclettes "prêtes à la route", ou similaires

(43) Veröffentlichungstag der Anmeldung: 12.12.1990
(73) Patentinhaber: CLEMENS FRITZE INDUSTRIEVERPACKUNGEN, 12059 Berlin (DE)
(72) Erfinder: Fritze, Rainer Dipl.-Kfm, D-12059 Berlin (DE)
(74) Vertreter: Hoffmann, Klaus-Dieter, Dipl.-Ing.

(56) Entgegenhaltungen:
- DE-A- 2 241 039
- DE-A- 3 011 816
- US-A- 3 393 935
- US-A- 4 171 741

## Beschreibung

Die Erfindung betrifft eine Versandverpackung für fahrbereite Motorräder und dergleichen, mit einem rahmenförmigen Boden, insbesondere Holzboden, mit zwei Längskufen, die auf mindestens drei zu ihnen quer verlaufenden Unterzügen befestigt sind, von denen - gesehen in Einschubrichtung des Motorrades - der erste am vorderen Abschnitt, der zweite in der Mitte und der dritte am hinteren Abschnitt der Längskufen befestigt ist, mit einer längsmittig des Bodens angeordneten von dessen vorderen Ende sich nach rückwärts erstreckenden seitlichen Führung für das Vorderrad des Motorrades, mit einem am vorderen Ende des Bodens oberhalb der seitlichen Führung für das Vorderrad zu diesem quer verlaufenden, ortsfesten Keilelement, das ein Widerlager für das Vorderrad in Einschubrichtung des Motorrades bildet, mit einer im hinteren Bereich des Bodens längsmittig angeordneten, seitlichen Führung für das Hinterrad des Motorrades und mit mit dem Boden in Eingriff bringbaren Spanngurten zum Verzurren des Motorrades am Boden.

Die Gestaltung einer Versandverpackung für nicht demontierte Motorräder ist grundsätzlich schwierig. Das Motorrad ist wegen seiner Form, seines Gewichtes (bis 500 kg) und seiner äußeren Beschaffenheit nicht umlegbar und nur in senkrechter Stellung in der Verpackung festzulegen und zu transportieren.

Motorräder sind insbesondere wegen ihrer Karosseriegestaltung aus dünnen Blech- und Kunststoffteilen in hohem Maß anfällig gegen Transportschädigungen.

Im kommerziellen Exportgeschäft werden Motorräder, vorwiegend in Einzelteile zerlegt, in starken Wellpappkisten verschickt. Nur von wenigen Herstellern werden bei Großserien gleicher Typen und Abmessungen Motorräder in fahrbereitem oder teildemontiertem Zustand in Einweg-Wegwerf-Verpackungen zum Versand gebracht.

Zur Festlegung eines Motorrades ist grundsätzlich notwendig eine Arretierung von Vorder- und Hinterrad, dann eine schräge (diagonale) Verspannung mit Gurten und/oder eine starre Festlegung im Oberteil der umschließenden Verpackung gegen Wände und Deckel.

Eine der Anmelderin bekannte Versandverpackung der eingangs erwähnten Art dient als Einwegverpackung für fahrbereite oder teildemontierte BMW-Motorräder bestimmten Typs und wird nach dem Auspacken des Motorrades am Empfangsort vernichtet. Diese Versandverpackung weist an den Außenkanten der Längskufen senkrechte Nuten zur Führung der Spanngurte auf. Das als Widerlager in Einschubrichtung des Motorrades dienende vordere Keilelement ist auf der seitlichen Führung für das Vorderrad befestigt. Die seitliche Führung für das Hinterrad ist auf zusätzlichen quer verlaufenden Unterzügen befestigt. Beim Einschieben des Motorrades müßten die quer verlaufenden Unterzüge, die Barrieren bilden, unter Aufbringung einer verhältnismäßig hohen Schubkraft nacheinander vom Vorderrad stufenmäßig überrollt werden, bis das Vorderrad am vorderen Keilelement anstößt.

Bei schweren Motorrädern ist ein derartiges Einschieben auch mit mehreren Personen nicht möglich. Deshalb werden bei der Verpackung am Fließband die Motorräder entweder mit elektrischen Hängezügen in den Bodenrahmen eingesetzt oder aber das Motorrad wird vor dem Boden hydraulisch mittels einer Plattform in die Ebene angehoben, in der die oberen Flächen der quer verlaufenden Rahmenteile des Bodenrahmens liegen. Gleichzeitig werden weiterhin die tiefer liegenden Zwischenräume zwischen den quer verlaufenden Rahmenteilen durch in den Boden des Aufsetzplatzes fest montierte hydraulisch anhebbare Ausgleichskonsole überbrückt, um auf dieser so geschaffenen Ebene ein Einfahren des Motorrads zu ermöglichen. Nach dem Einfahrvorgang wird das Motorrad durch Absenken der Ausgleichskonsole mit Vorder- und Hinterrad in durch die Querträger und Längsverbindungen des Verpackungsbodens für jeden Motorradtyp unterschiedlich vorfixierte Arretierungspositionen eingesetzt.

Danach kann das Motorrad nur locker und vorläufig angezurrt werden, da bei einer endgültigen festen Verzurrung der Boden sich bananenförmig durchbiegen würde. In dieser Form (- So - mit dieser Verformung) ist der Boden weder transport- noch lagerfähig.

Deshalb werden vor der endgültigen Verzurrung des Motorrades mittels der Spanngurte am Boden in diesem Fall an den Längskufen und an den vorderen und hinteren Querträgern Seitenteile aus Sperrholz oder Holzwerkstoffen angenagelt, die diesen dann hinreichend stabilisieren.

Für jeden Motorradtyp ist die Herstellung einer Versandverpackung entsprechender Bodenkonstruktion und entsprechender Größe notwendig.

Diese Verpackungsart ist nur geeignet für Motorräder gleichen Typs, d.h. gleicher Baumaße und nur für eine Serienverpackung mit entsprechenden Hilfsvorrichtungen und auf diese Verpackung spezialisiertem Fachpersonal. Sie ist keinesfalls wiederverwendbar.

Insbesondere im Zuge des internationalen Tourismus entsteht ein Bedarf für wiederverwendbare Verpackungen für beliebige nicht demontierte, fahrbereite Motorräder aller Größen, Typen und Ausstattungsvarianten.

Will z.B. ein Tourist mit seinem Motorrad in Übersee Urlaub machen, so muß er am Ende seines Urlaubs sein Motorrad wieder mit nach Hause nehmen können. In der Regel wird es sich hier um Flugtourismus handeln, d.h., das Motorrad wird im Frachtraum des gleichen Flugzeuges befördert, mit dem der Tourist reist. Bei Antritt des Rückfluges muß die Verpackung wieder zur Verfügung stehen.

Das gleiche Problem stellt sich für den Transport auf See oder über Land.

Bisherige Programme von Fluggesellschaften und Reiseveranstaltern scheiterten an der Verpackungsproblemstellung und der sicheren Unterbringung der Motorräder im Frachtraum des Transportmittels.

Bei den bisher im See- und Luftfrachtversand benutzten wegwerfbaren Einwegverpackungen für gleiche, in Großserien hergestellte Motorradtypen bestimmter Hersteller, haben sich Probleme gezeigt dadurch, daß:
1. Typen-Abmessungen und Ausstattungsvarianten zur vielfältig werden,
2. am Empfangsort, z.B. beim Motorradhändler in steigendem Maße erhebliche Kosten für das Entsorgen der Vollverpackungen entstehen.

Folgende Ziele sind hinsichtlich einer Versandverpackung ins Auge zu fassen:
1. Sichere und standfeste Verpackung für Motorräder aller Typen, Größen und Gewichte mit entsprechender Befestigungsmöglichkeit für das Motorrad,
2. die Versandverpackung muß mehrfach verwendbar sein
   a) aus Gründen der Kostenersparnis und der Verfügbarkeit zur Verpackung des Motorrades beim Rückflug des Touristen; oder
   b) um die Notwendigkeit einer kostenaufwendigen Entsorgung einer großvolumigen Wegwerfverpackung (Einwegverpackung) auszuschließen,
3. leichtes, gefahrloses und beschädigungsfreies Verbringen des Motorrades in die Verpackung und aus dieser heraus müssen gewährleistet sein,
4. die Versandverpackung muß sich leicht, ohne Beschädigung und ohne besondere Hilfsmittel und Werkzeuge montieren und demontieren lassen,
5. die Montage bzw. Demontage soll auch vom Laien ohne spezielle Vorkenntnisse möglich sein. Die Verpackung soll lediglich aus wenigen Teilen bestehen,
6. nach der Montage sollen zwingend keine Muttern, Schrauben oder andere Verbindungselemente frei werden. Da die Versandverpackungen oft in Länder mit unterschiedlichen Gewindenormen transportiert werden, wäre ein Verlust von Teilen der Versandverpackung schwerwiegend,
7. im demontierten Zustand soll das Volumen der zusammengelegten Versandverpackung so gering wie möglich sein. Mehrere zusammengelegte Verpackungen sollen miteinander überstaubar sein. Dies gilt für die Lagerung wie auch für eine eventuelle Rücksendung ohne Motorrad,
8. die Versandverpackung soll je nach Anforderung der Transportmittel mit oder ohne Wandung zweckentsprechend einsetzbar sein,
9. Transportmöglichkeit auf Rollen- und Kugelbahnen sowie durch Flurförderzeuge soll möglich sein,
10. standfeste und beschädigungsfreie Festlegung und Verzurrung der Versandverpackung im Laderaum eines Flugzeuges, im Luftfracht- oder Seecontainer oder in anderen Transportmitteln, wobei insbesondere die raumsparende Unterbringung und die den Vorschriften entsprechende Festlegung auf den weltweit genormten IATA-Luftfrachtpaletten (Ladebleche) für die unteren Laderäume der verschiedensten Passagiermaschinen gewährleistet sein soll.

Der Erfindung liegt daher die Aufgabe zugrunde, eine Versandverpackung der eingangs erwähnten Art so zu gestalten, daß sie den obigen Ansprüchen in ihrer Gesamtheit und hinsichtlich deren funktioneller Verflechtung zu genügen vermag.

Diese Aufgabe wird erfindungsgemäß dadurch gelöst, daß der Boden durch einen Unterrahmen höhenmäßig abgestuft und gegen die bei der Verzurrung auftretenden Kräfte biegesteif ist, wobei der Unterrahmen an jedem Ende des Bodens um ein vorbestimmtes Maß zurückversetzt ist und zwei senkrecht unter den Längskufen angeordnete, längs verlaufende Unterzüge aufweist, die über Zwischenstücke mit den quer gerichteten Unterzügen des Rahmens verbunden sind, daß längsmittig des Bodens ein auf den quer gerichteten Unterzügen gelagerter Rollboden vorgesehen ist, auf dem die seitlichen Führungen für das Vorder- bzw. das Hinterrad angebracht sind, daß ein an dem Boden mit einem beweglichen Befestigungselement angebrachtes Keilelement zur Arretierung des Motorrades in Längsrichtung in die Führung des Hinterrades längs verschieblich einführbar und mittels einer an der Führung angreifenden stufenlos verstellbaren Klemmeinrichtung hinter dem Hinterrad mit in Einschubrichtung weisender Keilfläche fixierbar und in eine an der hinteren Stirnfläche des Bodens vorgesehene Aussparung bei entgegen der Einschubrichtung weisender Keilfläche als Ein- und Ausfahrrampe für das Motorrad einpaßbar ist, wobei der Niveauunterschied zwischen der oberen Fläche des Rollbodens und der Auflageebene des Unterrahmens überbrückbar ist, und daß am Boden angreifende Ringösen vorgesehen sind, an denen die Spanngurte befestigt sind.

Vorteilhafte Weiterbildungen der erfindungsgemäßen Versandverpackung ergeben sich aus den Patentansprüchen 2 bis 21.

Die erfindungsgemäße Versandverpackung gewährleistet eine Einspannung in Längsrichtung zwischen dem festen vorderen Keilelement und dem stufenlos verstellbaren hinteren Keilelement ohne daß
a) das schwere Motorrad beim Durchfahren des Verpackungsbodens über Arretierungsschwellen geschoben werden muß,
b) die hintere Arretierung durch lose Schrauben hinter dem Hinterrad an vorfixierten Punkten angesetzt werden muß.

Die erfindungsgemäße Versandverpackung gewährleistet seitlichen Halt und Führung des Motorrades im Bereich des Vorderrades durch die beiden längs verlaufenden Führungselemente aus Holz der vorderen Führung und dem als Widerlager dienenden Keilelement vor dem Vorderrad. Das Hinterrad wird von zwei die hintere Führung bildenden Metallwinkelschienen ebenfalls seitlich geführt. Zur Arretierung des Motorrades in Längsrichtung wird hinter dem Hinterrad zwischen den Metallwinkelschienen das hintere Keilelement mit der für unterschiedliche Radstände ausgelegten stufenlos verstellbaren Klemmvorrichtung eingesetzt und an den Metallwinkelschienen klemmend befestigt.

Da die seitlichen Führungen für die Räder des Motorrades auf dem sich in Längsrichtung durch den Bodenrahmen erstreckenden Rollboden befestigt sind, ist ein leichtes Ein- und Ausschieben des Motorrades über das als Ein- bzw. Ausfahrrampe an der hinteren Stirnfläche des Bodens einpaßbare Keilelement und über den Rollboden möglich. Der Rollboden bildet eine sichere Standfläche für das Motorrad. Der Rollboden kann in dem Bereich des Vorderrades abgesenkt sein, wodurch eine effektivere Ausnutzung der Höhe der Versandverpackung möglich ist, was wegen verhältnismäßig hoher Windschilde der Motorräder und begrenzter Stauraum- und Türhöhe im Flugzeugladeraum von Wichtigkeit ist. Die Belastung wird hier nicht durch eine untere Abstützung wie im hinteren Abschnitt des Rollbodens aufgefangen, sondern durch Aufhängung der Sperrholzfläche an der seitlichen Führung des Vorderrades.

Der Unterrahmen ist an seinen vier äußeren Ecken mit dem ersten und dem dritten Unterzug und mit dem oberen Längskufen mit Durchgangsschrauben verbunden. Diese Vier Schrauben sind auf der Oberseite des Bodens mit Ringösen (Muttern mit darüber aufgeformten Ring) angezogen.

Diese vier Ringösen dienen gleichzeitig zur Verzurrung des Motorrades auf dem Boden und ebenso des Bodens im Laderaum, sofern z.B. für Nahtransporte und in Sonderfällen auf die Box-Wandungen verzichtet wird.

Vorzugsweise ist der Boden in Einfahrrichtung links mit einem auf dem zweiten und dem dritten quer verlaufenden Unterzug aufgebrachten Ständerbrett zum Aufsetzen des seitlichen Aufstellers des Motorrades ausgerüstet.

Diese Stellmöglichkeit des Motorrades erleichtert erheblich die Vorbereitung der Verzurrung (Einführung der Zurrgurte um die Rahmenteile usw.), wenn nur eine Person tätig ist.

Um einem beschädigungsfreien Transport des Motorrades zu gewährleisten, muß dieses durch eine Ummantelung bis zu einer Mindesthöhe von 60 cm ringsum geschützt werden. Die Seitenwandungen werden zweckmäßigerweise als Steckteile in vorgesehene Halterungen des Bodens eingesetzt und im Oberteil durch entsprechende Haltevorrichtungen als Gegenlager umfaßt.

Eine sichere (auch gegen Diagonalzug) Befestigung dieser boxähnlichen Ummantelung ist durch vertikal angesetzte Verbindungsstangen mit Spanngewinde an den oberen Enden o.ä. Mittel gegeben, wodurch jeweils eine Verbindung des Bodens und der oberen Haltevorrichtung gewährleistet ist.

Als Aufnahmelager für diese Senkrechtverspannung dienen acht Stahlblechecken (in 3 Ebenen), die jeweils verbunden sind
a) an den unteren 4 Ecken mit den Längskufen und
b) an den 4 oberen Ecken mit den Rahmenquerträgern. Die Rahmenquerträger können vorteilhafterweise auf den quer verlaufenden Wandungen der boxähnlichen Ummantelung nicht lösbar befestigt werden, so daß beim Aneinanderfügen der längs verlaufenden Wandungen mit den quer verlaufenden Wandungen die jeweiligen Stahlblechecken an den Enden der Rahmenquerträger, die jeweils innenseitig entlang der oberen Kanten der quer verlaufenden Wandungen befestigt sind, die in der Ecke aneinanderstoßenden Wandungsflächen umgreifen und zugleich mit ihrer stabilen Metallnase in die zugeordnete Nut in der Oberkante der jeweiligen längs verlaufenden Wandung verriegelnd eingreifen. Nach Anspannen der jeweiligen den Stahlblechecken zugeordneten Verspanneinrichtung ist eine absolute Fixierung der boxähnlichen Ummantelung am Boden gegeben.

Die vier Stahlblecheckenpaare werden jeweils durch den vertikalen Druck der auf die Verbindungsstangen aufgeschraubten Ringmuttern (Ringösen) auf die Oberkante der Wandungen der boxähnlichen Ummantelung und die Unterseite des Bodens gegeneinander gespannt, und schaffen so eine äußerst feste und verzurrungsfähige Verbindung der aufgesetzten boxähnlichen Ummantelung mit dem Boden.

Gleichzeitig sind die vier Verschraubungen an den oberen Ecken der boxähnlichen Ummantelung als Ringe ausgebildet, die eine sichere Verzurrung im Laderaum ermöglichen.

Ausführungsformen der vertikal wirkenden Spannverbindungen sind folgende:
1. Ein gerades Rund- oder Flacheisen, das unten durch eine aufgeschweißte Platte gesichert ist, wobei oben ein Gewindestück zur Spannverschraubung angesetzt ist (Nachteil: Nicht umklappbar, störend bei Einfahrt des Motorrades auf den Boden).
2. Eine Spannvorrichtung in Form einer Gabelgelenkverbindung, die kurz über der Oberkante des Bodens abknickbar ist. Somit entfällt die Notwendigkeit des Herausziehens und des losen Beilegens der Gewindestange bei der Demontage (Verlustgefahr).
   Statt der genannten Gabelgelenkverbindung ist auch eine einfachere und wirtschaftlichere Lösung möglich:
   Anstelle des Gabelgelenkes wird auf das Ende der kurz aus dem Boden ragenden Gewindestange hochkant eine Mutter geschweißt. Durch diese wird vor der endgültigen Befestigung am Boden eine um 90° abgewinkelte Gewindestange geschraubt. Das senkrechte Ende der Gewindestange ist so lang, daß es über die obere Blechecke am Querträger hinausragt und dort verschraubt werden kann. Nach der Montage dieser beweglichen Gewindestangeneinheit ist ein Entfernen der langen Gewindestange nicht mehr möglich. Sie läßt sich jedoch in die Waagerechte umlegen.
   Ebenso ist mit gleicher Wirkung eine Lösung möglich, bei der durch die Öffnung einer aus der Bodenkufe nach oben herausragenden Augenschraube eine um 90° abgewinkelte Verbindungsstange gesteckt wird, auf die kurz hinter dem Durchgang durch Aufschweißen einer Platte o.ä. eine nicht lösbare aber bewegliche Verbindung geschaffen wird.
3. Die Spannverbindung kann auch durch zwischen den oberen und unteren Aufnahmelagern angeordneten und nicht demontierbaren Zugfederanordnungen oder spannbarer Ketten gebildet werden.

Wegen der einfachen Hantierbarkeit und des sicheren Ausschließens der Verlustgefahr wird allgemein die abgewinkelte Stangenverbindung in einer angeschweißten Mutter oder in der mit dem Bodenteil verbundenen Augenschraube vorzuziehen sein.

Es ist somit eine gegen Seitenverschub absolut sichere und standfeste boxähnliche Ummantelung des Motorrades bis zur Höhe von ca. 70 cm über dem Boden gegeben.

In dieser leichten Ausführung ist bewußt nur Seitenschutz bis zu dieser Höhe aus Gründen der Gewichtsersparnis gegeben. Unterschiedliche Höhen der Motorräder können vernachlässigt werden.

Eine boxähnliche Ummantelung dieser Höhe gewährleistet ein beschädigungssicheres Nebeneinanderstellen der Motorräder oder auch das Stauen anderer Packstücke neben der Motorradverpackung auf einer Luftfrachtpalette oder in einem Laderaum.

Die erfindungsgemäße Versandverpackung ist in gleicher Art vorteilhafterweise lediglich mit höheren Wänden und Deckel auch als Vollverpackungen möglich. Sie ist dann entsprechend schwerer und teurer, ermöglicht aber ein Übereinanderstellen der Verpackungen. Die Stapelhöhe beträgt mindestens vier Einheiten übereinander, was wichtig für Stückgutversand im Seeschiff ist.

Die erfindungsgemäße Versandverpackung ist so konstruiert, daß nach Demontage zwingend keine losen Schrauben, Muttern oder andere Verbindungselemente frei werden, da in den Empfangsländern möglicherweise keine Verbindungselemente mit metrischen Gewinden zu beschaffen sind.

Die vier oberen Schraubösen sind mit genügend langen Ketten an den Rahmenquerträgern befestigt. Der Keil mit der Doppelfunktion, Arretierung und Auffahrt, ist mit einer genügend langen Kette am Boden befestigt. Alle anderen Verbindungselemente sind zwar ihrer Funktion entsprechend zu lösen, aber nicht zu entfernen.

Zur einfachen, auch vom Laien durchzuführenden Montage und Demontage ist die Verpackung so konstruiert, daß
1. diese nur aus dem Boden und den vier Aufsteckwandungen besteht - keine weiteren losen Teile,
2. das Feststellen der zusammengesteckten Teile und das Festellen des verschiebbaren Hinterradteiles nur mittels der erwähnten Schraubösen erfolgt. Diese sind ohne Werkzeug von Hand anziehbar. Gegebenenfalls durch Einstecken eines stabähnlichen Gegenstandes in den Ring der Schrauböse. Weitere Verschraubungen oder Verspannungen sind nicht erforderlich.

Weltweit genormte Luftfrachtpaletten (Ladebleche) für die unteren Laderäume (IATA PALLET-PI) haben bei einer Länge von 224 cm Verzurrungsschlitze in ca. 214 cm Längenabstand. Wegen der üblichen Motorradlängen ist eine Länge des Verpackungsbodens unter 232 cm nicht ausreichend. Eine Unterbringung dieses Bodens auf einer 224 cm langen Flugzeugpalette ist in dieser Richtung erlaubt, sofern ein Einbringen der Verzurrungsgurte oder Netze der Fluggesellschaft in die Verzurrungsschlitze (214 cm Abstand) möglich ist.

Hier ermöglicht die erfindungsgemäße Versandverpackung infolge des in der Höhe abgestuften Bodens, bei dem der Unterrahmen an jedem Ende gleichmäßig auf unter 214 cm zurückspringt, gute Bodenfreiheit für Verspannetze. Dieser Unterrahmen hat eine Bauhöhe von mindestens 6 cm und ermöglicht in dieser Höhe unter dem längeren Oberrahmen ein Einhängen der Verzurrgurte bzw. Netze für die Festlegung auf den genormten Palettenblechen. Gleichzeitig dienen seitliche Öffnungen im Unterrahmen dem Einfahren von Flurfördermitteln.

Durch die gitterträgerähnliche Konstruktion wird eine Biegefestigkeit des sehr leicht konstruierten Rahmens bewirkt (Gewichtsersparnis Luftfracht). Diese wird erforderlich gegen die durch die Zurrung des Motorrads auf dem Boden wirkenden Kräfte und auch bei der Bewegung des leichten Bodens mit z.B. Gabelstaplern.

Bevorzugte Ausführungsformen der erfindungsgemäßen Versandverpackung werden nun anhand der Zeichnungen erläutert. In diesen sind:
- Fig. 1: eine Draufsicht auf eine erste Ausführungsform der Versandverpackung bei vorgesehener Ein- und Ausfahrrampe für ein Motorrad,
- Fig. 2: eine Seitenansicht der in Fig. 1 gezeigten Ausführungsform,
- Fig. 3: eine Ansicht der in Fig. 1 in Einschubrichtung vorderen Stirnseite der Versandverpackung,
- Fig. 4: eine Ansicht der in Fig. 1 in Einschubrichtung hinteren Stirnseite der Versandverpackung,
- Fig. 5: eine perspektivische Ansicht der Ausführungsform nach Fig. 1 bei vorgesehener Ein- und Ausfahrrampe,
- Fig. 6: eine perspektivische Ansicht der Ausführungsform nach Fig. 1 bei vorgesehener Ein- und Ausfahrrampe und mit auf dem Boden mittels Spanngurten verzurrtem Motorrad,
- Fig. 7: eine der Fig. 6 entsprechende perspektivische Ansicht, wobei das Motorrad nach Beseitigung der Ein- und Ausfahrrampe und Fixierung des Hinterrades versandverpackt ist,
- Fig. 8: eine perspektivische Ansicht eines in eine seitliche Führung für das Hinterrad des Motorrades eingesetztes, als Hinterradfixierung dienendes Keilelement, das auch als Ein- und Ausfahrrampe verwendbar ist,
- Fig. 9a: eine perspektivische, teilweise weggebrochene Ansicht einer zweiten Ausführungsform der Versandverpackung mit einer Verspanneinrichtung in Form einer Federanordnung,
- Fig. 9b: eine der Fig. 9a entsprechende Ansicht, wobei die Verspanneinrichtung jedoch von einer Verbindungsstange mit einem Spanngewinde am oberen Ende gebildet ist,
- Fig. 10a: eine auseinandergezogene perspektivische Darstellung von eine Ecke einer Ummantelung der Ausführungsform nach den Fig. 9a und 9b der Versandverpackung bildenden Elemente,
- Fig. 10b: eine der Fig. 10a entsprechende Ansicht, jedoch mit verändert ausgeführten Wandungen der Ummantelung,
- Fig. 11: eine perspektivische Detailansicht der Fig. 9a und 9b der Ummantelung mit einer ersten Ausführungsform einer Verspanneinrichtung,
- Fig. 12: eine der Fig. 11 entsprechende Ansicht mit einer zweiten Ausführungsform der Verspanneinrichtung,
- Fig. 13: eine der Fig. 11 entsprechende Ansicht mit einer dritten Ausführungsform der Verspanneinrichtung,
- Fig. 14: eine Draufsicht auf eine längs verlaufende Wandung der boxähnlichen Ummantelung der zweiten Ausführungsform der Versandverpackung,
- Fig. 15: eine Draufsicht auf eine eine Stirnseite der boxähnlichen Ummantelung bildende Wandung, und
- Fig. 16: eine Seitenansicht einer Ladepalette gemäß den IATA-Vorschriften mit einer auf dieser verzurrten Versandverpackung gemäß der zweiten Ausführungsform.

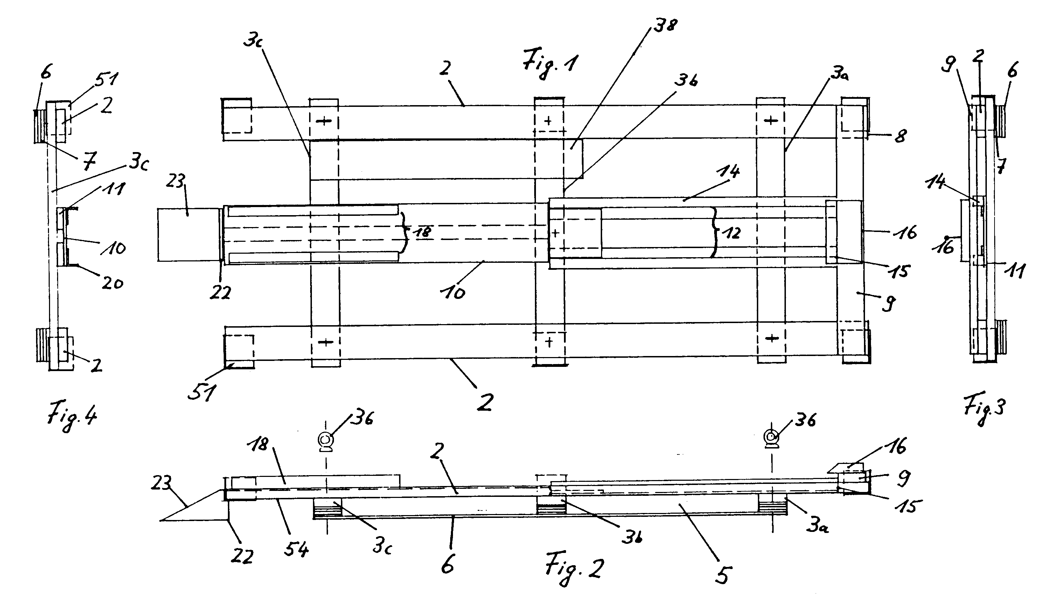

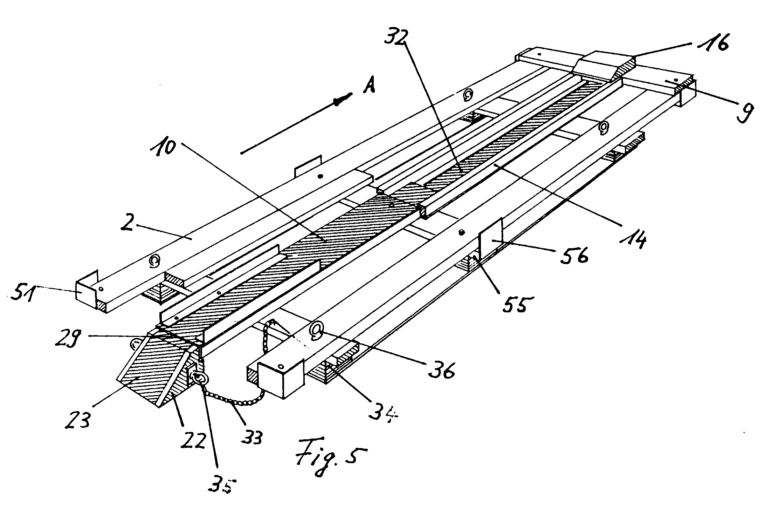

Aus den Fig. 1 bis 4 geht eine erste Ausführungsform der Versandverpackung für fahrbereite Motorräder mit einem rahmenförmigen Boden 1 hervor, der zwei im Abstand angeordnete parallele Längskufen 2 aufweist, die auf drei zu ihnen quer verlaufenden Unterzügen 3a bis 3c befestigt sind. Gesehen in Einschubrichtung (Pfeil A) des Motorrades 4 befindet sich der erste quer verlaufende Unterzug 3a am vorderen Abschnitt, der zweite quer verlaufende Unterzug 3b in der Mitte und der dritte quer verlaufende Unterzug 3c am hinteren Abschnitt der Längskufen 2 (vgl. Fig. 1 und 2). Wie die Fig. 2 verdeutlicht, ist der rahmenförmige Boden 1 durch einen Unterrahmen 5 höhenmäßig abgestuft, der zwei unter den Längskufen 2 angeordnete, längs verlaufende Unterzüge 6 aufweist, die mit den quer gerichteten Unterzügen 3a, 3b, 3c des Rahmens 1 über Zwischenstücke 7 verbunden sind. Der Unterrahmen 5 ist an jedem Ende des Bodens 1 um ein vorbestimmtes, gleiches Maß zurückversetzt. Bevorzugt weist der Boden 1 eine Länge von 232 cm und der an jedem Ende um das vorbestimmte gleiche Maß zurückversetzte Unterrahmen 5 eine maximale Länge von 214 cm auf. Durch die Kombination des rahmenförmigen Bodens 1 und des Unterrahmens 5 ist eine Gitter-Träger-Konstruktion gegeben, die biegesteif gegen die bei der Verzurrung auftretenden Kräfte ist und sich somit sicher lagern läßt. Der Abstand zwischen den Längskufen 2 und den zugeordneten längs verlaufenden Unterzügen 6 des Unterrahmens 5 beträgt mindestens 6 cm. Am vorderen Ende 8 der Längskufen 2 ist auf diesen ein Bodenquerholz 9 befestigt. Längsmittig des Bodens 1 ist ein Rollboden 10 vorgesehen, der auf Trägern 11 befestigt ist, die auf den quer gerichteten Unterzügen 6 des Rahmens 1 angebracht sind. Wie aus Fig. 3 hervorgeht, ist die obere Fläche des Rollbodens 10 unterhalb der Ebene angeordnet, in der die Unterfläche des Bodenquerholzes 9 liegt. Längsmittig des Rollbodens 10 ist eine von dessen vorderen Ende sich nach rückwärts bis zum zweiten quer verlaufenden Unterzug 3b erstreckende seitliche Führung 12 für das Vorderrad 13 des Motorrades 4 vorgesehen, deren Spurbegrenzungselemente 14 auf dem Rollboden befestigt sind. Die vorderen Stirnflächen 15 dieser Spurbegrenzungselemente 14 liegen an dem Bodenquerholz 9 an. Wie Fig. 2 verdeutlicht, ist auf dem Bodenquerholz 9 ein zu den Spurbegrenzungselementen 14 quer verlaufendes, sich über die Breite des Rollbodens 10 erstreckendes Keilelement 16 befestigt, dessen Keilflächen 17 entgegen der Einschubrichtung A gerichtet ist und das ein Widerlager für das Vorderrad 13 des Motorrades 4 in Einschubrichtung bildet. Der Rollboden 10 ist, wie Fig. 5 verdeutlicht, in dem Bereich des Vorderrades 13 abgesenkt, wodurch eine effektivere Ausnutzung der Höhe der Versandverpackung möglich ist, was wegen verhältnismäßig hoher Windschilde der Motorräder und begrenzter Stauraum- und Türhöhe im Flugzeugladeraum von Wichtigkeit ist. Im hinteren Bereich des Rollbodens 10 ist längsmittig eine seitliche Führung 18 für das Hinterrad 19 des Motorrades 4 angeordnet, deren Spurbegrenzungselemente von zwei auf dem Rollboden 10 befestigten Metallwinkelschienen 20 gebildet sind (Fig. 4 und 5), deren in Einschubrichtung A hintere Stirnflächen 21 in der Ebene der hinteren Stirnfläche 22 des Rollbodens 19 liegen.

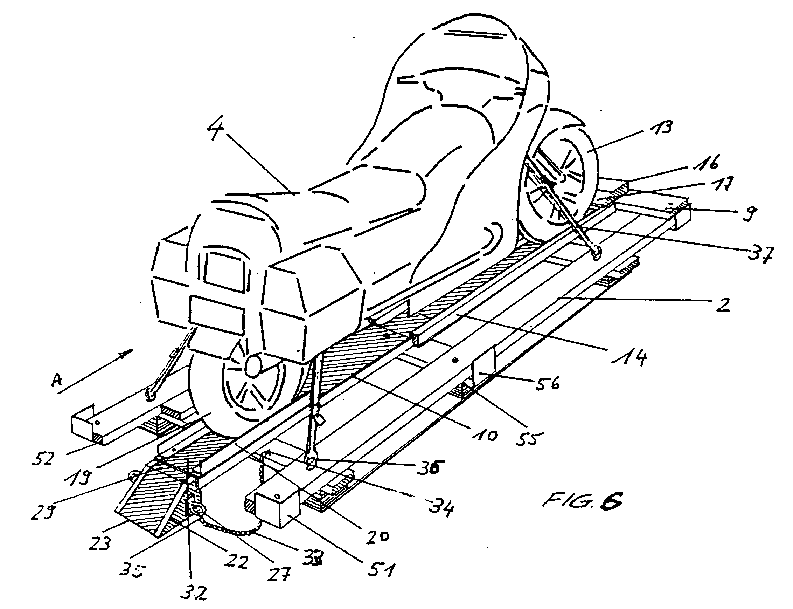

Fig. 8 zeigt eine perspektivische Ansicht eines als Ein- oder Ausfahrrampe für das Motorrad 4 (vgl. Fig. 1, 2, 5 und 6) oder als Fixierung für das Hinterrad 19 des Motorrades 4 (vgl. Fig. 6) dienendes Keilelement 22. Das Keilelement 22 ist mit in Einschubrichtung A weisender Keilfläche 23 geeignet in die seitliche Führung 18 des Hinterrades 19 längs verschieblich einführbar, wodurch Motorradtypen unterschiedlicher Länge in der Versandverpackung in Längsrichtung fixierbar sind. Das Keilelement 22 ist mittels einer stufenlos verstellbaren Klemmeinrichtung 24 an der seitlichen Führung 18 für das Hinterrad 19 festlegbar. Diese Klemmeinrichtung 24 weist beidseitig des Keilelementes 22 ein bewegliches Winkelsegment 25 auf. Die Winkelsegmente 25 sind auf einer durch das Keilelement 22 horizontal verlaufenden Gewindestange 26 gelagert und mittels auf dieser unverlierbar geführter Ringschrauben 27 an den Metallwinkelschienen 20 der hinteren seitlichen Führung 18 festklemmbar. Das Keilelement 22 ist auf seiner der Keilfläche 23 gegenüberliegenden Seite derart ausgespart ausgebildet, daß ein unterhalb der oberen Fläche 28 des Keilelementes 22 endender Kragen 29 gegeben ist, der bei Anordnung des Keilelementes 22 als Ein- und Ausfahrrampe für das Motorrad 4 bei in Einschubrichtung A weisender Keilfläche 23 in eine an der hinteren Stirnfläche 30 des Bodens 1 vorgesehene Aussparung 31 derart einpaßbar ist, daß der Niveauunterschied zwischen der oberen Fläche 32 des Rollbodens 10 und der Auflageebene des Unterrahmens 5 überbrückt ist und die obere Fläche 29 des Keilelementes 22 und die obere Fläche 32 des Rollbodens 10 in einer Ebene liegen (vgl. Fig. 5 und 6). Durch eine Kette 33, die mit einem Ende an einer der Ringschrauben 27 der Klemmeinrichtung 24 und mit dem anderen Ende an dem hinteren quer verlaufenden Unterzug 3c befestigt ist, ist das Keilelement 22 unverlierbar an dem Boden befestigt.

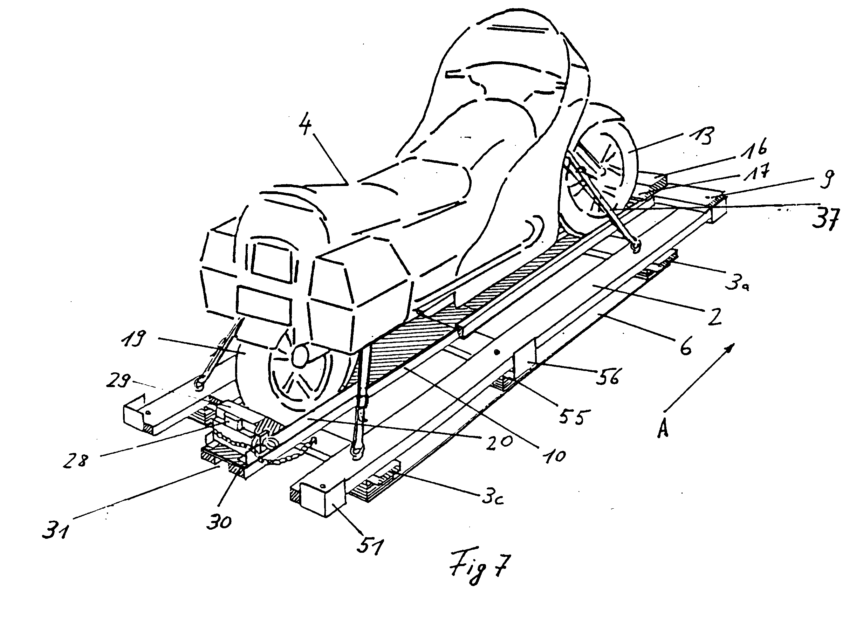

An den Längskufen 2 ist jeweils oberhalb der Enden des ersten bzw. des dritten quer verlaufenden Unterzuges 3a bzw. 3c eine Ringöse 36 unverlierbar befestigt. An diesen vier Ringösen 36 sind Spanngurte 37 befestigt, mit denen das Motorrad 4 am Boden 1 der Versandverpackung verzurrt ist (vgl. Fig. 6 und 7).

Wie aus Fig. 1 hervorgeht, ist - in Einschubrichtung A links der Längsachse des Bodens - ein zu den Längskufen 2 parallel verlaufendes Ständerbrett 38 auf dem zweiten und dem dritten quer verlaufenden Unterzug 3b bzw. 3c befestigt. Von Wichtigkeit ist, daß alle am rahmenförmigen Bogen 1 vorgesehenen Schraubverbindungen unverlierbar, jedoch nachziehbar gestaltet sind. Geeignete Spanngurte zum Verzurren der Versandverpackung auf genormten IATA-Luftpaletten können ebenfalls durch die Ringösen 36 geführt werden.

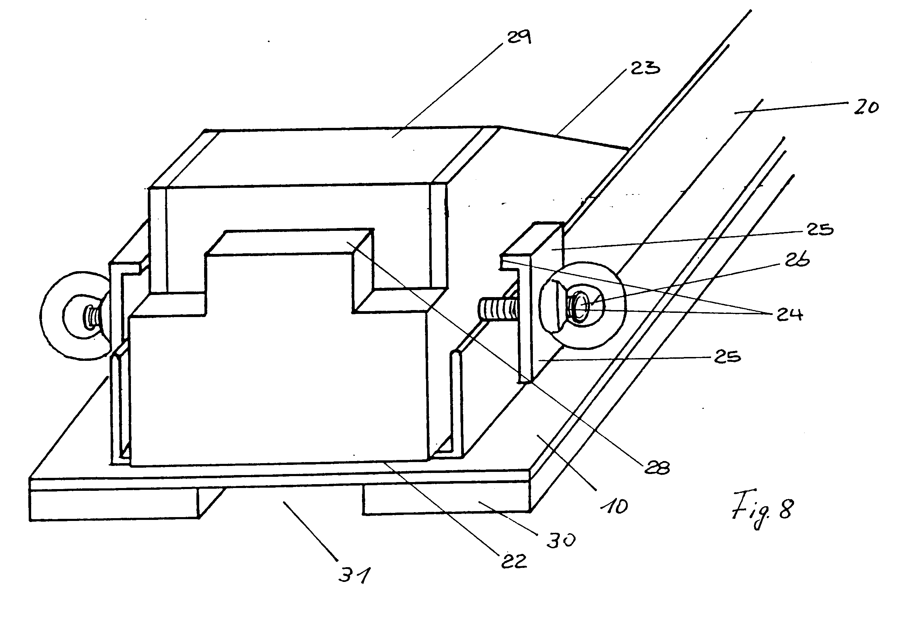

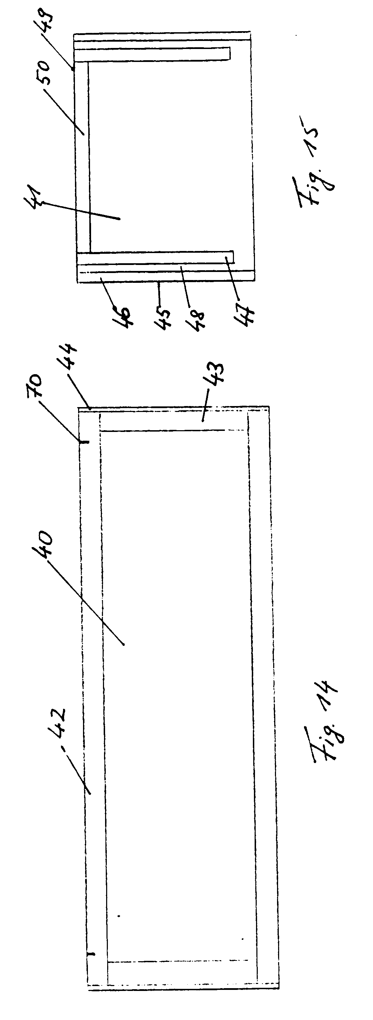

Die Fig. 9a und 9b verdeutlichen eine zweite Ausführungsform der Versandverpackung, die, ausgehend von dem Grundaufbau gemäß der ersten Ausführungsform der Versandverpackung, mit einer am Boden 1 lösbar befestigten boxähnlichen Ummantelung 39 einer Höhe versehen ist, die ein beschädigungssicheres Nebeneinanderstellen versandverpackter Motorräder 4 zuläßt. Die boxähnliche Ummantelung 39 setzt sich aus zwei längs verlaufenden Wandungen 40 gemäß Fig. 14 und zwei zu diesen quer gerichteten Wandungen 41 gemäß Fig. 15 zusammen, die steckmäßig und lösbar miteinander verbunden sind.

Die beiden längs verlaufenden Wandungen 40 weisen entlang ihrer Längskanten jeweils eine Verstärkungsleiste 42 auf, die an ihren Enden jeweils durch quer verlaufende Verstärkungsleisten 43 verbunden sind. Die längs verlaufenden Verstärkungsleisten 42 der längs verlaufenden Wandung 40 sind geringfügig kürzer als letztere, so daß an beiden Enden der längs verlaufenden Wandung 40 ein über deren Höhe verlaufender Steckwandungsteil 44 gegeben ist, dessen Stärke geringer als die Breite der längs verlaufenden und der vertikalen Verstärkungsleiste 42 bzw. 43 ist.

Jede quer verlaufende Wandung 41 der boxähnlichen Ummantelung 39 weist entlang ihrer vertikalen Kanten 45 eine erste vertikale Verstärkungsleiste 46 sowie jeweils in einem solchen Abstand von dieser eine zweite vertikale Verstärkungsleiste 47 auf, daß eine zum steckmäßigen Aufnehmen des Steckwandungsteils 44 der längs verlaufenden Wandung 40 geeignete Stecknut 48 jeweils gebildet ist. Entlang der oberen Querkante 49 der quer verlaufenden Wandung 41 ist eine Verstärkungsleiste 50 zwischen den beiden zweiten vertikalen Verstärkungsleisten 47 vorgesehen. Wie Fig. 15 verdeutlicht, ist die zweite vertikale Verstärkungsleiste um die Höhe der längs verlaufenden Verstärkungsleiste 42 der längs verlaufenden Wandung 40 kürzer als die erste vertikale Verstärkungsleiste 46 der quer verlaufenden Wandung 41.

An den unteren vier Ecken der Versandverpackung sind jeweils an den Enden der Längskufen 2 Stahlblechecken 51 befestigt, die jeweils einen Teil der Stirnfläche 52, der Außenliegenden Seitenfläche 53 und der Bodenfläche 54 der jeweiligen Längskufe 2 umfassen, über diese nach oben vorragen und mit den die jeweilige Ecke der boxähnlichen Ummantelung 39 bildenden Wandungen 40, 41 diese halternd in Eingriff stehen. Weiterhin ist jeweils oberhalb des mittleren quer verlaufenden Unterzuges 3b an jeder Längskufe 2 ein Stahlblechwinkel 55 befestigt, dessen einer Schenkel 56 in der Ebene der außen liegenden Seitenfläche 53 der Längskufe 2 senkrecht nach oben vorragt und mit der jeweiligen unteren längs verlaufenden Verstärkungsleiste 42 der längs verlaufenden Wandung 40 der Ummantelung 39 zusätzlich halternd in Eingriff steht.

Wie die Fig. 9a und 9b in Verbindung mit Fig. 10a verdeutlichen, ist an der in Einschubrichtung A vorderen und hinteren Stirnseite der boxähnlichen Ummantelung 39 ein vorderer oberer Rahmenträger 57 bzw. ein hinterer oberer Rahmenträger 58 steckmäßig und lösbar jeweils mit den oberen Kanten 59 der die oberen vorderen bzw. die oberen hinteren Ecken 60 der boxähnlichen Ummantelung 39 bildenden Wandungen 40, 41 in Eingriff. An den Enden 61 der oberen Rahmenträger 57 und 58 sind jeweils Stahlblechecken 62 befestigt (vgl. Fig. 10a), die jeweils die entsprechende Stirnfläche 63 sowie einen Teil der äußeren Seitenfläche 64 und der oberen Fläche 65 des Rahmenquerträgers 57 bzw. 58 umfassen, über die untere Fläche 66 des Rahmenträgers 57 bzw. 58 vorragen und zwischen sich und der Stirnfläche 63 sowie der äußeren Seitenfläche 64 des Rahmenträgers 57 bzw. 58 jeweils eine Stecknut 67 bilden, in der im auf die oberen Enden der boxähnlichen Ummantelung 39 aufgesteckten Zustand der oberen Rahmenträger 57 bzw. 58 jeweils die entsprechenden Verstärkungsleisten 42 und 46 der die entsprechende obere Ecke der Ummantelung 39 bildenden Wandungen 40, 41 aufgenommen sind. Jede Stahlblechecke 62 weist ferner eine in der Ebene der innenliegenden Seitenfläche 68 des oberen Rahmenquerträgers 57 bzw. 58 nach unten abgekantete, senkrechte, stabile Metallnase 69 auf, die lösbar verriegelt in eine entsprechende Nut 70 in der Oberkante 59 der zugeordneten längs gerichteten Wandung 40 sowie der zugeordneten längs verlaufenden oberen Verstärkungsleiste 42 eingreift. Diese zusätzliche Verriegelung bewirkt eine starre Verbindung der Wandungen auch bei Diagonalschub und -zug.

Aus Fig. 10b geht eine gegenüber der Ausführungsform nach Fig. 10a dahingehend geänderte Ausführungsform der die boxähnliche Ummantelung bildenden Wandungen 40, 41 hervor, daß an den quer verlaufenden Wandungen 41 keine erste vertikale Verstärkungsleiste (vgl. Fig. 15) und somit keine Stecknut vorgesehen ist. Vielmehr ist auf den quer verlaufenden Wandungen 41 beidseits eine der zweiten vertikalen Verstärkungsleiste 47 gemäß Fig. 10a entsprechende vertikale, zurückversetzte Verstärkungsleiste 47a aufgebracht. Die entsprechende Ecke der boxähnlichen Ummantelung wird einfach durch Ansetzen der jeweiligen längs verlaufenden Wandung 40 an die zurückversetzte vertikale Verstärkungsleiste 47a (Versatz) gebildet. Der Eingriff der senkrechten Metallnase 69 der jeweiligen Stahlblechecke 62 an jedem Ende der Rahmenquerträger 57 bzw. 58, die an der entsprechenden quer verlaufenden Wandung 41 befestigt sein können, in die zugeordnete Nut 70 in der entsprechenden längs verlaufenden Wandung 40 sorgt für eine ausgezeichnete Befestigung der Wandungen 40 und 41 miteinander an der jeweiligen Ecke der boxähnlichen Ummantelung 39.

Wie die Fig. 9a und 9b sowie 11 bis 13 verdeutlichen, sind die die boxähnliche Ummantelung 39 bildenden Wandungen 40, 41 über senkrecht wirkende Verspanneinrichtungen 71 mit dem Boden 1 fest, jedoch lösbar verspannt. Die Verspanneinrichtungen 71 greifen, gesehen in Einschubrichtung A, jeweils am hinteren Ende der Längskufen 2 sowie am zugeordneten Ende des hinteren oberen Rahmenquerträgers 58 bzw. an den Enden des auf den Längskufen 2 befestigten Bodenquerholzes 9 und den zugeordneten Enden des vorderen oberen Rahmenträgers 57 an, und zwar einerseits an auf der oberen Fläche 72 der Längskufen 2 an deren hinterem Ende 73 sowie auf der oberen Fläche 74 des Bodenquerholzes 9 an dessen Enden unverlierbar, jedoch nachziehbar angebrachten Ringösen 75 und andererseits an an den zugeordneten Enden 61 des oberen hinteren bzw. des oberen vorderen Rahmenquerträgers 58 bzw. 57 unverlierbar befestigten Schraubringösen 76.

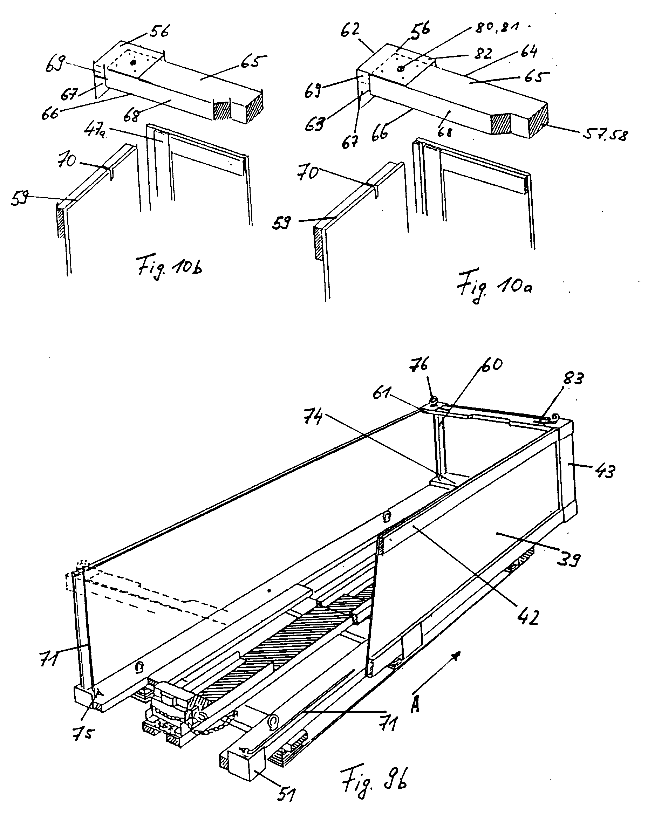

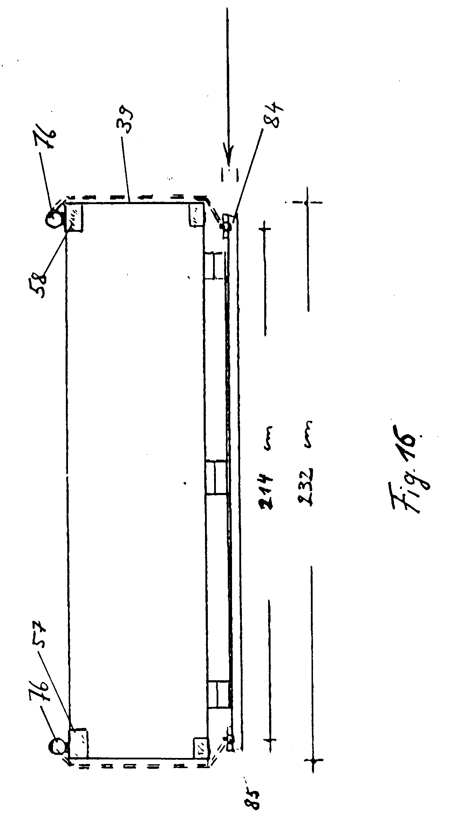

Bevorzugt ist die Verspanneinrichtung 71 gemäß den Fig. 9b und 11 von einer Verbindungsstange 77 gebildet, die an ihrem unteren Ende einen rechtwinklig abgebogenen, verhältnismäßig kurzen Schenkel 78 aufweist, der durch die jeweilige zugeordnete Ringöse 75 am entsprechenden Ende der Längskufen 2 geführt ist. Am oberen Ende der Gewindestange 77 ist ein Spanngewinde 79 ausgebildet, das durch eine im zugeordneten oberen Rahmenquerträger 57 bzw. 58 vorgesehene Bohrung 80 und eine mit dieser fluchtenden Bohrung 81 im auf der oberen Fläche 65 des Rahmenquerträgers 57 bzw. 58 aufliegenden Schenkel 82 der entsprechenden Stahlblechecke 62 geführt ist und über den oberen Rahmenquerträger 57 bzw. 58 hinausragt. Das Spanngewinde 79 der Gewindestange 77 ist mit der zugeordneten Schraubringöse 76 am oberen Rahmenquerträger 57 bzw. 58 gewindemäßig verspannt, wobei die jeweiligen unteren und oberen Stahlblechecken 51 und 62 fest und verwindungssteif zusammengedrückt sind. Ist die boxähnliche Ummantelung 39 auseinandergebaut und die Verspanneinrichtung 71 somit im funktionslosen Zustand, so ist die Gewindestange 77 nach Schwenkung in die Horizontale auf der entsprechenden Längskufe 2 unverlierbar gelagert und behindert nicht (vgl. Fig. 9b). Die lösbaren Schraubringösen 76 an den oberen Rahmenquerträgern 57 bzw. 58 sind mittels Ketten 83 an den Rahmenquerträgern 57 bzw. 58 unverlierbar befestigt. An den Schraubringösen 76 an den Rahmenquerträgern 57 bzw. 58 sind weitere Spanngurte befestigbar, die zum Verzurren der Ausführungsform der Versandverpackung gemäß den Fig. 9a und 9b in einem Laderaum oder auf einer genormten IATA-Luftfrachtpalette 84 dienen (vgl. Fig. 16). Derartige IATA-Luftfrachtpaletten haben eine Länge von 214 cm. Da der Unterrahmen 5 der Versandverpackung infolge der beidseitigen Zurückversetzung um ein vorbestimmtes gleiches Maß eine geeignete Führung der durch die Schraubringösen 76 geführten Spanngurte um den rahmenförmigen Boden 1 zu den Halterungsösen 85 der Luftfrachtpalette 84 zuläßt, kann eine Versandverpackung mit einer Länge von 232 cm problemlos auf der Luftfrachtpalette 84 verzurrt werden (vgl. Fig. 16).

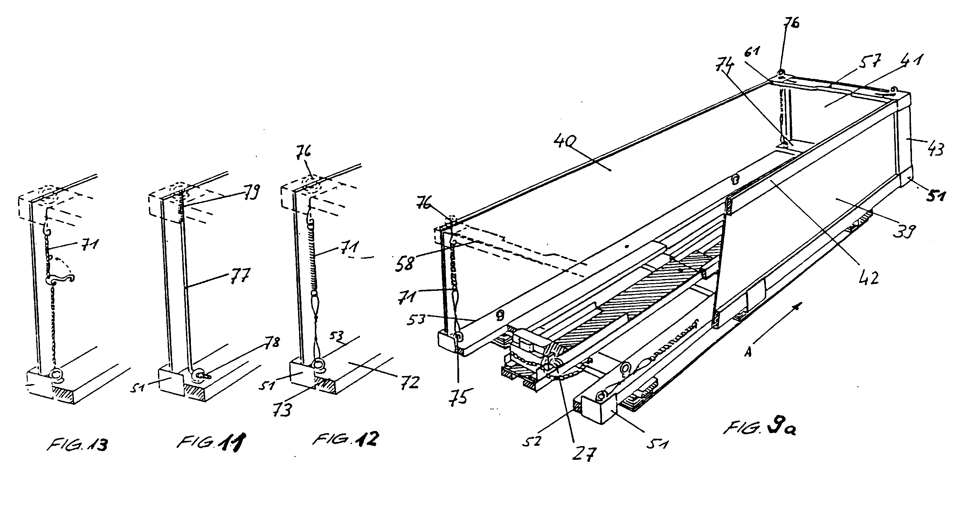

Die Fig. 9a und 12 zeigen eine Ausführungsform der Verspanneinrichtung 71 in Form einer Federanordnung und Fig. 13 eine Ausführungsform der Verspanneinrichtung 71 in Form einer spannbaren Kette, die in entsprechender Weise an den zugeordneten Ringösen 75 an den Längskufen 2 bzw. am Bodenquerholz 9 und den entsprechenden Schraubringösen 76 an den oberen Rahmenquerträgern 57 bzw. 58 verspannend angreifen.

Die boxähnliche Ummantelung 39 erstreckt sich bis zu einer Höhe von maximal 70 cm über der Unterfläche der längs verlaufenden Unterzüge 6.

### Bezugszeichenliste

- 1: Rahmenförmiger Boden
- 2: Längskufen
- 3a, 3b, 3c: Quer verlaufende Unterzüge
- Pfeil A: Einschubrichtung
- 4: Motorrad
- 5: Unterrahmen
- 6: Längs verlaufende Unterzüge
- 7: Zwischenstücke
- 8: Vordere Enden der Längskufen
- 9: Bodenquerholz
- 10: Rollboden
- 11: Träger
- 12: Seitliche Führung des Vorderrades
- 13: Vorderrad
- 14: Spurbegrenzungselemente der seitlichen Führung 12
- 15: Vordere Stirnflächen der Spurbegrenzungselemente der vorderen Führung
- 16: Vorderes Keilelement
- 17: Keilfläche des vorderen Keilelementes
- 18: Seitliche Führung für das Hinterrad
- 19: Hinterrad
- 20: Metallwinkelschienen
- 21: Hintere Stirnflächen der Metallwinkelschienen
- 21a: Hintere Stirnfläche des Rollbodens
- 22: Hinteres Keilelement
- 23: Keilfläche des hinteren Keilelementes
- 24: Klemmeinrichtung
- 25: Winkelsegment
- 26: Gewindestange der Klemmeinrichtung
- 27: Ringschrauben
- 28: Kragen
- 29: Obere Fläche des Keilelementes 22
- 30: Hintere Stirnfläche des Rollbodens
- 31: Aussparung
- 32: Obere Fläche des Rollbodens
- 33: Kette
- 34, 35: Enden der Kette 33
- 36: Ringösen
- 37: Spanngurte zum Verzurren des Motorrades am Boden
- 38: Ständerbrett
- 39: Boxähnliche Ummantelung
- 40: Längs verlaufende Wandungen
- 41: Quer verlaufende Wandungen
- 42: Längs verlaufende Verstärkungsleisten
- 43: Vertikale Verstärkungsleisten
- 44: Steckwandungsteil
- 45: Vertikale Kanten
- 46: Erste vertikale Verstärkungsleiste der quer verlaufenden Wandung
- 47, 47a: Zweite vertikale Verstärkungsleiste der quer verlaufenden Wandung
- 48: Verstärkungsnut
- 49: Obere Querkante
- 50: Verstärkungsleiste
- 51: Stahlblechecken
- 52: Stirnfläche der Längskufen 2
- 53: Seitenflächen der Längskufen 2
- 54: Bodenfläche der Längskufen
- 55: Stahlblechwinkel
- 56: Schenkel des Stahlblechwinkels
- 57: Vordere obere Rahmenquerträger
- 58: Hintere obere Rahmenquerträger
- 59: Obere Kanten
- 60: Obere Ecken
- 61: Enden der oberen Rahmenquerträger
- 62: Stahlblechecken
- 63: Stirnflächen der oberen Rahmenquerträger
- 64: Äußere Seitenfläche der oberen Rahmenquerträger
- 65: Obere Fläche der Rahmenquerträger
- 66: Untere Fläche der Rahmenquerträger
- 67: Stecknut der Rahmenquerträger
- 68: Innenliegende Seitenfläche der Rahmenquerträger
- 69: Metallnase 70 Nut in der oberen Kante der längs verlaufenden Wandung 40 und der zugeordneten oberen längs verlaufenden Verstärkungsleiste 42
- 71: Verspanneinrichtung
- 72: Obere Fläche der Längskufen 2
- 73: Hinteres Ende der Längskufen 2
- 74: Obere Fläche des Bodenquerholzes 9
- 75: Ringösen
- 76: Schraubringösen
- 77: Verbindungsstange
- 78: Schenkel der Verbindungsstange 77
- 79: Spanngewinde
- 80: Bohrung im Rahmenquerträger
- 81: Bohrung in der Stahlblechecke 62
- 82: Schenkel der Stahlblechecke 62
- 83: Kette am Rahmenquerträger
- 84: Luftfrachtpalette
- 85: Halterungsösen der Luftfrachtpalette

## Patentansprüche

1. Versandverpackung für fahrbereite Motorräder und dergleichen mit einem rahmenförmigen Boden, insbesondere Holzboden, mit zwei Längskufen, die auf mindestens drei zu ihnen quer verlaufenden Unterzügen befestigt sind, von denen - gesehen in Einschubrichtung des Motorrades - der erste am vorderen Abschnitt, der zweite in der Mitte und der dritte am hinteren Abschnitt der Längskufen befestigt ist, mit einer längsmittig des Bodens angeordneten von dessen vorderen Ende sich nach rückwärts erstreckenden seitlichen Führung für das Vorderrad des Motorrades, mit einem am vorderen Ende des Bodens oberhalb der seitlichen Führung für das Vorderrad zu diesem quer verlaufenden, ortsfesten Keilelement, das ein Widerlager für das Vorderrad in Einschubrichtung des Motorrades bildet, mit einer im hinteren Bereich des Bodens längsmittig angeordneten, seitlichen Führung für das Hinterrad des Motorrades und mit mit dem Boden in Eingriff bringbaren Spanngurten zum Verzurren des Motorrades am Boden, dadurch gekennzeichnet, daß
- der Boden (1) durch einen Unterrahmen (5) höhenmäßig abgestuft und gegen die bei der Verzurrung auftretenden Kräfte biegesteif ist,
- der Unterrahmen (5) an jedem Ende des Bodens (1) um ein vorbestimmtes gleiches Maß zurückversetzt ist und zwei senkrecht unter den Längskufen (2) angeordnete, längs verlaufende Unterzüge (6) aufweist, die mit den quer gerichteten Unterzügen (3a bis 3c) des Rahmens (1) verbunden sind,
- längsmittig des Bodens (1) ein auf den quer gerichteten Unterzügen (3a bis 3c) gelagerter Rollboden (10) vorgesehen ist, auf dem die seitlichen Führungen (12 und 18) für das Vorder- bzw. das Hinterrad (13 bzw. 19) angebracht sind,
- ein an dem Boden (1) mit einem beweglichen Befestigungselement unverlierbar angebrachtes Keilelement (22) zur Arretierung des Motorrades (4) in Längsrichtung in die Führung (18) des Hinterrades (19) längs verschieblich einführbar, mittels einer an der Führung (18) angreifenden stufenlos verstellbaren Klemmeinrichtung (24) hinter dem Hinterrad (19) mit in Einschubrichtung weisender Keilfläche (23) fixierbar und in eine an der hinteren Stirnfläche (30) des Bodens (1) vorgesehene Aussparung (38) bei entgegen der Einschubrichtung weisender Keilfläche (23) als Ein- und Ausfahrrampe für das Motorrad (4) einpaßbar ist, wobei der Niveauunterschied zwischen der oberen Fläche (31) des Rollbodens (10) und der Auflageebene des Unterrahmens (5) überbrückbar ist,
- und daß am Boden (1) Ringösen (35) unverlierbar befestigt sind, an denen die Spanngurte (36) zum Verzurren des Motorrades (4) angebracht sind.

2. Versandverpackung nach Anspruch 1, dadurch gekennzeichnet, daß die längs verlaufenden Unterzüge (6) über Zwischenstücke (7) mit den quer gerichteten Unterzügen (3a bis 3c) des Rahmens (1) verbunden sind.

3. Versandverpackung nach Anspruch 1 und 2, dadurch gekennzeichnet, daß der längsmittig des Bodens (1) verlaufende Rollboden (10) auf Trägern (11) befestigt ist, die auf den quer gerichteten Unterzügen (3a bis 3c) des Bodens (1) angebracht sind.

4. Versandverpackung nach Anspruch 1 und 2, dadurch gekennzeichnet, daß der längsmittig des Bodens (1) verlaufende Rollboden (10) im Bereich der seitlichen Führung (12) für das Vorderrad (13) abgesenkt ist.

5. Versandverpackung nach Anspruch 1 bis 4, dadurch gekennzeichnet, daß am vorderen Ende (8) der Längskufen (2) ein auf diesen angebrachtes Bodenquerholz (9) vorgesehen ist, auf dem das als Widerlager für das Vorderrad (13) in Einschubrichtung des Motorrades (4) dienende Keilelement (16) befestigt ist und an dem die vorderen Stirnflächen (15) von zwei die Führung (12) des Vorderrades (13) bildenden Spurbegrenzungselementen (14) anliegen, und daß die Lauffläche (31) des Rollbodens (10) im Bereich der Führung (12) des Vorderrades (13) unterhalb der Ebene verläuft, in der die Unterseite des Bodenquerholzes (9) liegt.

6. Versandverpackung nach Anspruch 1 bis 5, dadurch gekennzeichnet, daß - in Einschubrichtung links - ein zu den Längskufen (2) parallel verlaufendes Ständerbrett (38) auf dem zweiten und dem dritten quer verlaufenden Unterzug (3b und 3c) befestigt ist.

7. Versandverpackung nach Anspruch 1, dadurch gekennzeichnet, daß das bewegliche Befestigungselement (32), an dem das Keilelement (22) zur Arretierung des Motorrades (4) in Längsrichtung am Boden (1) unverlierbar angebracht ist, eine Kette ist.

8. Versandverpackung nach Anspruch 1, dadurch gekennzeichnet, daß der Abstand zwischen den Längskufen (2) und den zugeordneten längs verlaufenden Unterzügen (6) des Unterrahmens (5) mindestens 6 cm beträgt.

9. Versandverpackung nach Anspruch 1, dadurch gekennzeichnet, daß vier der Ringösen (35) zum Verzurren des Motorrades (4) an den Längskufen (2) jeweils oberhalb der Enden des ersten und des dritten quer verlaufenden Unterzuges (3a und 3c) unverlierbar befestigt sind.

10. Versandverpackung nach Anspruch 1, dadurch gekennzeichnet, daß der Boden (1) eine Länge von 232 cm und der an jedem Ende um ein vorbestimmtes Maß zurückversetzte Unterrahmen (5) eine Länge von 214 cm aufweisen.

11. Versandverpackung nach Anspruch 1, dadurch gekennzeichnet, daß die Spurbegrenzungselemente (20) der seitlichen Führung (18) für das Hinterrad (19) von zwei auf dem Rollboden (10) befestigten Metallwinkelschienen gebildet sind, an denen jeweils ein bewegliches Winkelsegment (25) der stufenlos verstellbaren Klemmeinrichtung (24) festklemmbar ist.

12. Versandverpackung nach Anspruch 1 und 12, dadurch gekennzeichnet, daß die beiden beweglichen Winkelsegmente (25) der Klemmeinrichtung (24) auf einer durch diese horizontal verlaufenden Gewindestange (26) gelagert und mittels auf dieser unverlierbar geführten Ringmuttern (27) an den Metallwinkelschienen (20) verspannbar sind.

13. Versandverpackung nach Anspruch 1 bis 12 mit eine boxähnliche Ummantelung bildenden, am Boden befestigten Wandungen einer Höhe, die ein beschädigungssicheres Nebeneinanderstellen versandverpackter Motorräder zuläßt, dadurch gekennzeichnet,
daß die die boxähnliche Ummantelung (39) bildenden Wandungen (40, 41) steckmäßig und lösbar miteinander verbunden und durch Halterungen (51, 55) am Boden (1) gehaltert sowie über senkrecht ausgerichtete Verspanneinrichtungen (71) am Boden (1) fest, aber lösbar verspannt sind, die - gesehen in Einschubrichtung - am hinteren und am vorderen Ende des Bodens (1) jeweils an den Längskufen (2) und einem hinteren, oberen Rahmenquerträger (58) bzw. jeweils an dem auf den Längskufen (2) befestigten Bodenquerholz (9) und einem vorderen, oberen Rahmenquerträger (57) lösbar angreifen, die jeweils mit den oberen Kanten (59) der die oberen hinteren bzw. die oberen, vorderen Ecken (60) der boxähnlichen Ummantelung (39) bildenden Wandungen (40, 41) steckmäßig und lösbar in Eingriff sind, und
daß die Elemente (76, 77) der Verspanneinrichtungen (71) in ihrem funktionslosen Zustand unverlierbar an den Längskufen (2) und dem hinteren Rahmenquerträger (57) bzw. an dem Bodenquerholz (9) und dem vorderen Rahmenquerträger (58) gehaltert sind.

14. Versandverpackung nach Anspruch 13, dadurch gekennzeichnet,
daß die Halterungen (51,55) für die Wandungen (40, 41) von an den unteren vier Ecken der Verpackung an den Längskufen (2) befestigten Stahlblechecken (51), die jeweils einen Teil der Stirnfläche (52), der außenliegenden Seitenfläche (53) und der Bodenfläche (54) der jeweiligen Längskufe (2) umfassen, über diese nach oben vorragen und mit den die jeweilige Ecke der Ummantelung (39) bildenden Wandungen (40, 41) in Eingriff stehen, und von jeweils einem oberhalb des mittleren, quer verlaufenden Unterzuges (36) an jeder Längskufe (2) befestigten Stahlblechwinkel (55) gebildet sind, dessen einer Schenkel (56) vor der Ebene der außenliegenden Seitenfläche (53) der Längskufe (2) senkrecht nach oben vorragt und mit der jeweiligen längsgerichteten Wandung (40) der Ummantelung (39) in Eingriff steht,
daß jeweils an den Enden (61) der oberen Rahmenquerträger (57, 58) Stahlblechecken (62) befestigt sind, die jeweils die entsprechende Stirnfläche (63) sowie einen Teil der äußeren Seitenfläche (64) und der oberen Fläche (65) des Rahmenquerträgers (57 bzw. 58) umfassen, über die untere Fläche (66) des Rahmenquerträgers (57 bzw. 58) vorragen, jeweils mit den die entsprechende obere Ecke der Ummantelung (39) bildenden Wandungen (40, 41) in Eingriff stehen und eine in der Ebene der innenliegenden Seitenfläche (68) des Rahmenquerträgers (57 bzw. 58) nach unten abgekantete, senkrechte, stabile Metallnase (69) aufweisen, die lösbar verriegelnd in eine entsprechende Nut (70) in der Oberkante (59) der zugeordneten längsgerichteten Wandung (40) der Ummantelung (39) eingreift, und
daß jeweils an den Enden (73) der Längskufen (2) einerseits auf deren oberer Fläche (72) und andererseits auf der oberen Fläche des Bodenquerholzes (9) eine zusätzliche Ringöse (75) lösbar, aber unverlierbar und senkrecht über dieser am jeweiligen zugeordneten Ende (61) des entsprechenden Rahmenquerträgers (57 bzw. 58) eine am Schenkel (56) der zugeordneten Stahlblechecke (62), der auf der oberen Fläche (65) des Rahmenquerträgers (57 bzw. 58) aufliegt, angreifende und im funktionslosen Zustand am Rahmenquerträger (57 bzw. 58) unverlierbar mittels eines beweglichen Befestigungselementes (83) gehalterte Schraubringöse (76) befestigt bzw. vorgesehen ist, an denen die Enden der jeweiligen zugeordneten lösbaren, senkrecht ausgerichteten Verspanneinrichtungen (71) angreifen, wobei an den Schraubringösen (76) an den Rahmenquerträgern (57 bzw. 58) Spanngurte befestigbar sind, die zum Verzurren der Versandverpackung auf einer Palette (84) oder in einem Laderaum vorgesehen sind.

15. Versandverpackung nach Anspruch 13 und 14, dadurch gekennzeichnet, daß jede senkrecht ausgerichtete Verspanneinrichtung (71) von einer Verbindungsstange (77) gebildet ist, die an ihrem unteren Ende einen rechtwinklig abgebogenen, verhältnismäßig kurzen Schenkel (78) aufweist, der durch die jeweilige zugeordnete Ringöse (75) am entsprechenden Ende der Längskufe (2) geführt ist, und am oberen Ende ein Spanngewinde (79) aufweist sowie durch eine im zugeordneten oberen Rahmenquerträger (57 bzw. 58) vorgesehene Bohrung (80) und eine mit dieser fluchtenden Bohrung (81) im auf der oberen Fläche (65) des Rahmenquerträgers (57 bzw. 58) aufliegenden Schenkel (82) der entsprechenden Stahlblechecke (62) geführt, mit der zugeordneten Schraubringöse (76) am Rahmenquerträger (57 bzw. 58) gewindemäßig verspannt in Eingriff steht, wobei die jeweiligen unteren und oberen Stahlblechecken (57 bzw. 62) fest und verwindungssteif zusammengedrückt sind, und im funktionslosen Zustand nach Schwenkung in die Horizontale auf der Längskufe (2) unverlierbar lagerbar sind.

16. Versandverpackung nach Anspruch 13 und 14, dadurch gekennzeichnet, daß jede Verspanneinrichtung (71) von einer an die zugeordnete Ringöse (75) an der Längskufe (2) bzw. an dem Bodenquerholz (9) und der entsprechenden Schraubringöse (76) am oberen Rahmenquerträger (57 bzw. 58) verspannend angreifende Federanordnung gebildet ist.

17. Versandverpackung nach Anspruch 13 und 14, dadurch gekennzeichnet, daß jede Verspanneinrichtung (71) von einer an der zugeordneten Ringöse (75) an der Längskufe (2) bzw. an dem Bodenquerholz (9) und der entsprechenden Schraubringöse (76) am oberen Rahmenquerträger (57 bzw. 58) angreifenden, spannbaren Kette gebildet ist.

18. Versandverpackung nach Anspruch 13, dadurch gekennzeichnet, daß die boxähnliche Ummantelung (39) sich bis zu einer Höhe von etwa 70 cm über der Unterfläche der längsverlaufenden Unterzüge (6) erstreckt.

19. Versandverpackung nach Anspruch 13, dadurch gekennzeichnet, daß das bewegliche Befestigungselement (83) der am Rahmenquerträger (57 bzw. 58) jeweils gehalterten Schraubringöse (76) eine Kette ist.

20. Versandverpackung nach Anspruch 13, dadurch gekennzeichnet, daß die boxähnliche Ummantelung (39) eine Höhe aufweist, die größer als das versandverpackte Motorrad (4) ist, und unter Bildung einer Vollverpackung mit einem Deckel versehen ist.

21. Versandverpackung nach Anspruch 1 bis 20, dadurch gekennzeichnet, daß alle am Boden (1) vorgesehenen Schraubverbindungen unverlierbar, aber nachziehbar gestaltet sind.

## Claims

1. A shipping container for motor cycles ready for use or similar, comprising a frame-shaped bottom panel, particularly made of wood, having two longitudinal runners secured to at least three stringers extending transversely thereto of which - seen in the direction the motor cycle is introduced into the container - the first, second and third ones are fastened to front, center and rear portions, respectively, of said longitudinal runners, guide means for laterally guiding the motor cycle front wheel, said means secured along the longitudinal centerline of the bottom panel and extending rearwardly from the front end thereof, a stationary wedge element disposed at the front end of the bottom panel above said lateral front wheel guide means and in a direction transverse thereof to form an abutment for said front wheel in the direction the motor cycle is introduced, guide means for the rear wheel of said motor cycle and disposed along the longitudinal centerline of the bottom panel in the rear portion thereof, and straps engageable with the bottom panel for lashing the motor cycle thereto,
characterized by
- an underframe (5) underneath base (1), said underframe imparting a stepped configuration to the base and rendering it resistant against lashing-induced flexing forces,
- underframe (5) being drawn in at each end of base (1) by equal distances and having two longitudinally extending stringers (6) vertically placed under runners (2), said stringers (6) being connected to transversely directed stringers (3a to 3c) of base (1),
- a rolling floor (10) provided along the centerline of base (1) on said transversely extending stringers (3a to 3c), said rolling floor having affixed thereto lateral guide structures (12 and 18) for the front and rear wheels (13, 19),
- a wedge element (22) captively affixed to base (1) by means of a movable fastening member, said wedge element being adapted to be longitudinally slid into guide structure (18) for rear wheel (19) for fixing motor cycle (4) in position, being adapted further to be secured in position by infinitely adjustable clamping means engaging guide structure (18) behind rear wheel (19) with the ramp surface (23) of said wedge element facing in the direction of motor cycle introduction, and being adapted further to be fitted into a recess (38) provided at the rear end surface (30) of base (1) with ramp surface (23) facing in a direction opposite the direction of motor cycle introduction and acting as a motor cycle roll-in and roll-out ramp, with means being provided for equalizing the difference in level between top surface (31) of rolling floor (10) and the resting plane of underframe (5), and
- eye members (35) captively affixed to base (1) to receive straps (36) for lashing motor cycle (4) in position.

2. Shipping container as in claim 1, characterized in that longitudinal stringers (6) are connected via intermediate pieces (7) with transversely directed stringers (3a to 3c) of base (1).

3. Shipping container as in claim 1 and 2, characterized in that rolling floor (10) extending along the centerline of base (1) is secured on supports (11) affixed to transversely directed stringers (3a to 3c) of base (1).

4. Shipping container as in claim 1 and 2, characterized by rolling floor (10) extending along the centerline of base (1) being lowered in the area of lateral guide structure (12) for front wheel (13).

5. Shipping container as in claim 1 to 4, characterized by a bottom tie member (9) made of wood transversely extending at front ends (8) of longitudinal runners (2) whereto is affixed wedge element (16) acting as an abutment for front wheel (13) in the direction of introduction of motor cycle (4) and which engages front end faces (15) of two track limiting members (14) forming guide structure (12) for front wheel (13), and by top surface (31) of rolling floor (10) extending in the area of guide structure (12) for front wheel (13) below the plane wherein the bottom surface of tie member (9) lies.

6. Shipping container as in claim 1 to 5, characterized by a jack rest board (37) extending on the lefthand side (in the direction of introduction) in parallel with longitudinal runners (2) and affixed to second and third transverse stringers (3b and 3c).

7. Shipping container as in claim 1, characterized in that said movable fastening element (32) which retains wedge element (22) for securing motor cycle (4) in the longitudinal direction and which is captively affixed to base (1) comprises a chain.

8. Shipping container as in claim 1, characterized by the distance between longitudinal runners (2) and the associated longitudinal stringers (6) of underframe (5) is at least 6 cm.

9. Shipping container as in claim 1, characterized by four eye members (35) for lashing motor cycle (4) in place are captively affixed to longitudinal runners (2) above the ends of first and third transverse stringers (3a and 3c), respectively.

10. Shipping container as in claim 1, characterized in that base (1) has a length of 232 cm and in that underframe (5) drawn in at each end for a predetermined distance has a length of 214 cm.

11. Shipping container as in claim 1, characterized by track limiting elements (20) of lateral guiding structure (18) for rear wheel (19) comprise two metal angle-section bars affixed to rolling floor (10) and each adapted to have clamped thereto a movable angle segment (25) of said infinitely adjustable clamping means (24).

12. Shipping container as in claim 1 and 11, characterized by movable angle segments (25) of clamping assembly (24) being mounted on an externally threaded rod (26) horizontally extending through said assembly, said angle segments being adapted to be tightened on said rod against metal angle-section bars (20) by eye nuts (27) captively held thereon.

13. Shipping container as in claims 1 to 12, including wall panels forming a box-like enclosure, secured to said base and having a height permitting motor cycles packaged therein amd ready to be shipped to be placed side by side without running the risk of being damaged, characterized
in that wall panels (40, 41) forming box-like enclosure (39) are releasably joined in a tongue-and-groove fashion, are mounted on base (1) by retainers (51, 55) and are securely but releasably clamped to base (1) by vertically directed clamping assemblies (71) releasably engaging the rear and front ends (seen in the direction of introduction) of base (1) at longitudinal runners (2) and rear top transverse frame beam (58) and at bottom tie member (9) secured to runners (2) and a front top transverse frame beam (57), respectively, which beams are releasably joined in a tongue-and-groove fashion with the top rear and top front corners (60) of wall panels (40, 41) forming box-like enclosure (39), and in that in their rest condition components (76, 77) of clamping assembly (71) are held captive to longitudinal runners (2) and rear transverse beam (57) and to bottom tie member (9) and front transverse beam (58).

14. Shipping container as in claim 13, characterized in that
retainers (51, 55) for wall panels (40, 41) comprise sheet steel corner members (51) which are secured to longitudinal runners (2), embrace portions of end faces (52), of external surface (53) and of bottom surface (54) of a respective runner (2), extend upwardly above said runners and engage the wall members (40, 41) forming the respective corner of enclosure (39), and further comprise sheet steel angles (55) each secured to longitudinal runner (2) above central transverse stringer (3b) and having one (56) of its legs extending upwards at a distance from external side surface (53) of longitudinal runner (2) and engaging the respective longitudinal wall panel (40) of enclosure (40),
ends (61) of top transverse frame beams (57, 58) have sheet steel angle members (61) affixed thereto which embrace the respective end face (63) and portions of the external side surface (64) and of top surface (65) of the respective one of transverse frame beams (57 or 58), extend downwardly below bottom surface (66) of the respective one of beams (57, 58), engage the wall panels (40, 41) forming the corresponding top corner of enclosure (39), and have a vertical sturdy metal nose (69) bent down in the plane of interior side surface (68) of the corresponding transverse frame beam (57 or 58), said nose lockably engaging a corresponding groove (70) in top edge (59) of the associated longitudinally directed wall panel (40) of enclosure (39), and in that
additional eye members (75) are secured releasably but captively to longitudinal runners (2) at each their ends (73) on top surface (72) thereof on the one hand and on the top surface of bottom tie (9) on the other hand and in that eye members (76) are provided vertically above said eye members (75) at the corresponding ends (61) of the corresponding transverse frame beam (57 or 58, respectively), said eye members (76) engaging that leg (56) of the associated sheet steel corner elements (62) which lies on top surface (65) of the respective transverse frame beam (57 or 58) and being releasably but captively held thereto in their non-fastening condition by means of movable fastening elements (83), said eye members (76) on transverse frame beams (57, 58) being provided to engage the ends of the associated releasable vertically directed clamping assemblies (71) and to secure thereto the straps used for lashing the shipping container in position on a pallet (84) or in a cargo hold.

15. Shipping container as in claim 13 and 14, characterized in that each vertically directed clamping assembly (71) comprises a connecting rod (77) having at its bottom end a relatively short leg (78) bent perpendicular thereto to enter the associated eye member (75) at the corresponding end of longitudinal runner (2) and having a threaded portion at its top end which extends through a bore (80) in the associated top transverse frame beam (57 or 58) and through an aligned bore (81) in the leg (82) resting on top surface (65) of transverse frame beam (57 or 58) of the corresponding sheet steel corner element (62) to threadingly engage and be tightened by the associated eye element (76) on beam (57 or 58), causing the respective top and bottom sheet steel corner elements to be clamped together to impart resistance to flexing to the assembly, whereby said connecting rods are adapted in their non-clamping condition to be rotated down to a horizontal position on longitudinal runner (2) to be captively held thereon.

16. Shipping container as in claim13 and 14, characterized in that each clamping assembly (71) is formed by spring means engaging the corresponding eye member (75) on longitudinal runner (2) or bottom tie (9) and the corresponding eye member (76) on top transverse frame beam (57 or 58) to tension them against each other.

17. Shipping container as in claim 13 and 14, characterized in that each clamping assembly (71) is formed by chain means engaging the corresponding eye member (75) on longitudinal runner (2) or bottom tie (9) and the corresponding eye member (76) on top transverse frame beam (57 or 58) and adapted to tension them against each other.

18. Shipping container as in claim 13, characterized in that box-like enclosure (39) extends up to a height of approximately 70 cm above the bottom surface of longitudinal runners (6).

19. Shipping container as in claim 13, characterized in that the movable fastening elements (83) for fastening eye members (76) to transverse frame beams (57, 58) comprise chains.

20. Shipping container as in claim 13, characterized by box-like enclosure (39) having a height greater than motor cycle (4) in a condition ready to be shipped, said enclosure being provided with a top cover to form a full enclosure.

21. Shipping container as in claims 1 to 20, characterized that all threaded conections provided on base (1) are captive, but adapted to be tightened.

## Revendications

1. Emballage d'expédition pour motocyclettes en état de marche et semblables avec un fond en forme de cadre, tout particulièrement fond de bois, avec deux patins longitudinaux fixés sur au moins trois entraits transversaux dont le premier - vu en direction d'introduction de la motocyclette - est fixé au secteur avant, le deuxième au centre et le troisième au secteur arrière des patins longitudinaux - avec un guidage Latéral pour la roue d'avant de la motocyclette disposé centriquement en long du fond et allant de son extrémité avant vers l'arrière, avec un élément-clavette fixe prévu à l'extrémité avant du fond au-dessus du guidage latéral pour la roue d'avant et transversal à celui-ci, constituant une butée pour la roue d'avant en direction d'introduction de la motocyclette, avec un guidage latéral pour la roue d'arrière de la motocyclette disposé centriquement en long dans le secteur arrière du fond et avec des courroies de serrage en prise avec le fond servant à serrer la motocyclette sur le fond, caractérisé par le fait que
- le fond (1) est gradué on hauteur par un cadre inférieur (5) et est rigide à la flexion quant aux forces surgissant lors du serrage,
- le cadre inférieur (5) est reculé en arrière à chaque extrémité du fond (1) d'une même valeur prédéterminée et dispose de deux entraits (8) longitudinaux disposés verticalement en-dessous des patins longitudinaux (2) et reliés avec les entraits transversaux (3a à 3c) du cadre (1),
- centriquement en long du fond (1) est prévu un fond roulant (10) disposé sur les entraits transversaux (3a à 3c)sur lequel sont montés les guidages latéraux (12 et 18) pour la roue d'avant et la roue d'arrière (13 et 19),
- un élément-clavette (22) servant à arrêter la motocyclette (4) monté sur le fond (1) avec un élément de fixation mobile peut être introduit en direction longitudinale dans le guidage (18) de la roue d'arrière (19) de manière à pouvoir être déplacé longitudinalement, peut être fixé moyennant un dispositif de serrage (24) à réglage continu en attaque au guidage (18) derrière la roue d'arrière (19) avec une surface de cale (23) en direction d'introduction et peut être emboîté dans un évidement (38) prévu à la face frontale arrière (30) du fond (1), la surface de cale (23) étant opposée à la direction d'introduction, pour servir de rampe d'entrée et de sortie à la motocyclette (4), la différence de niveau entre la surface supérieure (31) du fond de roulement (10) et le niveau d'appui du cadre inférieur (5) pouvant être aplanie,
- et que des oeillets annulaires (35) sont fixés imperdablement sur le fond (1) sur lesquels sont disposées les courroies de serrage (36) servant à serrer la motocyclette (4).

2. Emballage d'expédition suivant revendication 1, caractérisé par le fait que les entraits longitudinaux (8) sont reliés avec les entraits transversaux (3a à 3c) du cadre par des pièces intermédiaires.

3. Emballage d'expédition suivant revendications 1 et 2 caractérisé par le fait que le fond de roulement (10) centrique en long du fond (1) est fixé sur des supports (11) montés sur les entraits (3a à 3c) du fond (1).

4. Emballage d'expédition suivant revendications 1 et 2 caractérisé par le fait que le fond de roulement (10) centrique en long du fond (1) abaissé dans le secteur du guidage latéral (12) pour la roue d'avant (13).

5. Emballage d'expédition suivant revendications 1 à 4 caractérisé par le fait qu'un traversin de fond (9) est prévu à l'extrémité avant (8) des patins longitudinaux (2)monté sur ceux-ci sur lequel est fixé l'élément de cale (16) servant de butée pour la roue d'avant (13) en direction d'introduction de la motocyclette (4) et sur lequel portent les faces frontales avant (15) de deux éléments limiteurs de passage (14) constituant les guidage (12) de la roue d'avant (13) et que la surface de roulement (31) du fond de roulement (10) est dans le secteur du guidage (12) de la roue d'avant (13) prévue en-dessous du niveau dans lequel est situé la face inférieure du traversin de fond (9).

6. Emballage d'expédition suivant revendications 1 à 5 caractérisé par le fait que - en direction d'introduction gauche - une planche de support (37) parallèle aux patins longitudinaux (2) est fixée sur le deuxième et le troisième entrait transversal (3b et 3c).

7. Emballage d'expédition suivant revendication 1 caractérisé par le fait que l'élément de fixation mobile (32) sur lequel est monté de manière imperdable l'élément de cale (22) servant à arrêter la motocyclette (4)en direction longitudinale sur le fond (1) est une chaîne.

8. Emballage d'expédition suivant revendication 1 caractérisé par le fait que la distance entre les patins longitudinaux (2) et les entraits longitudinaux y relatifs (6) du cadre inférieur (5) est au moins de 6 cm.

9. Emballage d'expédition suivant revendication 1 caractérisé par le fait que quatre des oeillets annulaires (35) servant à serrer la motocyclette (4) sur les patins longitudinaux (2) sont fixés respectivement de manière imperdable au-dessus des extrémités du premier et du troisième entrait transversal (3a et 3c).

10. Emballage d'expédition suivant revendication 1 caractérisé par le fait que le fond (1) est d'une longueur de 232 cm et le cadre inférieur (5) placé en arrière à chaque extrémité d'une grandeur déterminée est d'une longueur de 214 cm.

11. Emballage d'expédition suivant revendication 1 caractérisé par le fait que les éléments limiteurs de passage (20) du guidage latéral (18) pour la roue d'arrière (19) sont constitués par deux cornières métalliques fixées sur le fond de roulement (10) sur lesquelles peuvent être serrés respectivement un segment d'angle mobile (25) du dispositif de serrrage (24) réglable en continu.

12. Emballage d'expédition suivant revendications 1 et 12 caractérisé par le fait que les deux segments d'angle mobiles (25) du dispositif de serrage (24) sont logés sur une barre filetée (26) passant horizontalement par-dessus de celui-ci et peuvent être serrés sur les cornières métalliques (20) moyennant des écrous à oeillet (27) guidés de manière imperdable sur la barre filetée.

13. Emballage d'expédition suivant revendications 1 à 12 avec des parois constituant un revêtement en forme de boîtier fixée sur le fond d'une hauteur permettant de juxtaposer de manière à empêcher des endommagemant des motocyclettes emballées pour l'expédition caractérisé par le fait,
que les parois (40, 41) constituant un revêtement en forme de boîtier (39) sont reliées entre elles de manière fichable et détachable et sont appuyées sur le fond (1) par des attaches (51,55) et sont serrées de manière fixe mais détachable sur le fond (1) par-dessus des dispositifs de serrage (71) alignés verticalement qui - vu en direction d'introduction - mordent de manière amovible aux extrémités arrière et avant respectivement du fond (1) des patins longitudinaux (2) et à une traverse de cadre (58) arrière supérieure ou respectivement au traversin (9) fixé sur les patins longitudinaux (2) et à une traverse avant supérieure (57) qui sont en prise de manière fichable et détachable respectivement avec les arêtes supérieures (59) des parois (40, 41) constituant les angles supérieurs arrière ou supérieurs avant (60) du revétement en forme de boîtier, et
que les éléments (76, 77) des dispositifs de serrage (71) sont appuyés en état hors service de manière imperdable sur les patins longitudinaux (2) et la traverse de cadre arrière (9) et la traverse de cadre avant (58).

14. Emballage d'expédition suivant revendication 13 caractérisé par le fait
que les attaches (51, 55) pour les parois saillissent en haut des angles en tôles d'acier (51) fixés sur les patins longitudinaux (2) aux quatre angles inférieurs de l'emballage comprenant respectivement une partie de la face frontale (52), de la face latérale extérieure (53) et de la surface (54) du patin longitudinal respectif (2) et sont en prise avec les parois (40, 41) constituant l'angle respectif du revêtement (39) et sont constituées respectivement par un angle en tôle d'acier (55) fixé sur, chaque patin longitudinal (2) au-dessus du moyen entrait transversal (36),dont une aile (56) saillit verticalement en haut devant le niveau de la face latérale extérieure (53) du patin longitudinal (2) et est en prise avec la paroi longitudinale respective (40) du revêtement,
que des angles en tôle d'acier (62) sont fixés respectivement aux extrémités des traverses de cadre supérieures (57, 58) conprenant respectivement la face frontale correspondante (63) ainsi qu'une partie de la face latérale extérieure (64) et de la surface supérieure (65) de la traverse de cadre (57 ou 58), font saillie de la surface inférieure (66) de la traverse de cadre (57 ou 58), sont en prise respectivement avec les parois (40, 41) constituant l'angle supérieur correspondant du revêtement (39) et présentent un nez métallique vertical solide (69) plié en bas au niveau de la face latérale intérieure (68) de la traverse de cadre (57 ou 58) s'attaquant de manière verrouillante amovible dans une rainure correspondante (70) dans l'arête supérieure (59) de la paroi longitudinale respective (40) du revêtement (39), et
qu'aux extrémités respectives (73) des patins longitudinaux (2) sur leur surface supérieure d'une part et sur la surface supérieure du traversin de fond (9) d'outre part un oeillet annulaire additionnel (75) amovible, mais imperdable et vertical à celuici à l'extrémité respective (61) de la traverse de cadre respective (57 ou 58) un oeillet annulaire fileté (76) est fixé resp. prévu étant en prise avec l'aile (56) de l'angle en tôle d'acier adjoint (62) reposant sur la surface supérieur (66) de la traverse de cadre (57 ou 58) et attaché en état hors service sur la traverse de cadre (57 ou 58) de manière imperdable moyennant un élément de fixation mobile (83), sur lesquels mordent les extrémités des dispositifs de serrage respectifs adjoints amovibles verticaux (71) des courroies de serrage pouvant être fixées aux oeillets annulaires filetés (76) aux traverses de cadre (57 ou 58) prévues à serrer l'emballage d'expédition sur une palette (84) ou dans une cale.

15. Emballage d'expédition suivant revendications 13 et 14 caractérisé par le fait que chaque dispositif de serrage (71) aligné verticalement est constitué par une barre de liaison (77) qui présente à son extrémité inférieure une aile repliée rectangulairement et relativement courte (78) qui est guidée à travers l'oeillet respectif adjoint (75) à l'extrémité correspondante du patin longitudinal (2) et qui présente à l'extrémité supérieure un filet de serrage ainsi que guidée à travers un alésage (80) prévu à la traverse de cadre supérieure adjointe (57 ou 58) et un alésage (81) aligné à celui-ci dans l'aile (82) reposant sur la surface supérieure (65) de la traverse de cadre (57 ou 58) de l'angle correspondant en tôle d'acier (62), est en prise avec l'oeillet annulaire fiteté (76) adjoint serré par filetage à la traverse de cadre (57 ou 58), les angles en tôle d'acier respectifs inférieur et supérieur (57 ou 62) étant serrés de manière rigide et résistant à la torsion et en état hors service pouvant être logés de manière imperdable sur le patin longitudinal (2) après avoir été pivotés horizontalement.

16. Emballage d'expédition suivant revendications 13 et 14 caractérisé par le fait que chaque dispositif de serrage (71) est constitué par un arrangement à ressort mordant en vue du serrage à l'oeillet annulaire (75) adjoint au patin longitudinal (2) resp. au traversin de fond (9) et à l'oeillet annulaire fileté correspondant (76) à la traverse de cadre supérieure (57 ou 58).

17. Emballage d'expédition suivant revendications 13 et 14 caractérisé par le fait que chaque dispositif de serrage est constitué par une chaîne pouvant être serré et mordant à l'oeillet annulaire (75) adjoint au patin longitudinal (2) resp. au traversin de fond (9) et à l'oeillet annulaire fileté correspondant (76) à la traverse de cadre supérieure (57 ou 58).

18. Emballage d'expédition suivant revendication 13 caractérisé par le fait que le revêtement en forme de boîtier (39) s'étend jusqu'à une hauteur d'environ 70 cm au-dessus de la surface inférieure des entraits longitudinaux (6).

19. Emballage d'expédition suivant revendication 13 caractérisé par le fait que l'élément de fixation mobile (83) de l'oeillet annulaire fileté (76) attaché respectivement à la traverse de cadre (57 ou 58) est une chaîne.

20. Emballage d'expédition suivant revendication 13 caractérisé par le fait que le revêtement en forme de boîtier (39) présente une hauteur supérieure à la motocyclette (4) emballée pour expédition et est pourvu d'un couvercle en formant un emballage plein.

21. Emballage d'expédition suivant revendications 1 à 20 caractérisé par le fait que tous les raccords à vis prévus au fond (1) sont concus de manière imperdable mais serrable.
